# EUROPÄISCHE PATENTANMELDUNG

(11) **EP 1 324 219 A1**
(43) Veröffentlichungstag der Anmeldung: **02.07.2003**
(21) Anmeldenummer: 01811210.2
(22) Anmeldetag: 11.12.2001
(51) Int. Cl.: G06F 17/30

(54) **Verfahren zum kategoriegestützten Suchen nach Informationsobjekten in den Informationspools und System zum Auffinden solcher Informationsobjekte**

(71) Anmelder: ABB RESEARCH LTD., 8050 Zürich (CH)
(72) Erfinder: Gelle, Esther, 8965 Berikon (CH); Karhu, Katja, 5405 Baden (CH); Le, Julien, 1008 Prilly (CH); Riffel, Michael, 76709 Kronau (DE); Schepik, Viktor, 73579 Schechingen (DE)
(74) Vertreter: ABB Patent Attorneys

(57) **Zusammenfassung**

Die Erfindung ist gerichtet auf ein Verfahren zum kategoriegestützten Suchen nach Informationsobjekten in Informationspools, beispielsweise dem Internet, welches die folgenden Schritte aufweist: Durchsuchen des Informationspools nach geeigneten Informationsobjekten, welche anwenderdefinierten Vorgaben genügen; Feststellen zumindest einer Kategorie eines Kategorisierungssystems für zumindest einen Teil des Informationspools, zu der das oder die gefundenen Informationsobjekte zugeordnet sind, und/oder Zuordnen der gefundenen Informationsobjekte zu geeigneten Kategorien zumindest dann, wenn ein Informationsobjekt nach kategorie-Kriterien gefiltert werden soll; Filtern der gefundenen Informationsobjekte nach anwenderdefinierten Kategorie-Kriterien und/oder anwenderdefinierten Ähnlichkeitskriterien, und Präsentieren der gefilterten Informationsobjekte.

## Beschreibung

### Technisches Gebiet

Die Erfindung betrifft ein Verfahren und System, mit dessen Hilfe Informationspools wie z.B. das Internet, nach Kriterien durchsucht und die Ergebnisse nach Kategorien bzw. Ähnlichkeiten gefiltert werden können.

### Stand der Technik

Die exponentiell anwachsenden Informationsmenge, welche der Menschheit zur Verfügung gestellt wird, insbesondere hinsichtlich in und über Datenverarbeitungsanlagen verfügbare Informationen, erfordern die ständige Entwicklung anspruchsvollerer Suchmöglichkeiten zum Auffinden gewünschter Informationen in den wachsenden Informationspools.

Gerade das Internet, jedoch auch viele andere datenbankbasierte Informationspools wie beispielsweise der Datenbankservice "Medigen" etc. sind ohne leistungsfähige Suchwerkzeuge praktisch nicht mehr zugänglich. Im wesentlichen werden zur Informationsgewinnung zwei Ansätze verwendet, nämlich zum einen das automatische Indizieren der Informationen und Abspeichern der derart gewonnenen Index-Informationen zusammen mit einer Referenz auf einem Informationsobjekt, zum anderen das zumeist noch händisch durchgeführte Einordnen von Informationsobjekten in ein Kategorisierungssystem, welches zumeist hierarchisch nach Themen untergliedert, ebenfalls Referenzen auf die Informationsobjekte enthält.

Moderne Internetsuchmaschinen wie Google oder Altavista und DirectHit verfolgen simultan beide Ansätze, indem sie einerseits die Suche in einem automatisch erstellten Index ermöglichen, andererseits dem Anwender zusätzlich ein hierarchisches Kategorieschema (ein sog. Portal) mit individuell eingeordneten, als besonders nützlich eingestuften Verweisen anbieten.

Die im Internet verwendeten Suchmaschinen ermöglichen dem Anwender die Eingabe von Suchbegriffen und ihre Verknüpfung durch Boole'sche Operatoren wie AND, OR oder NOT. Die Suchmaschine vergleicht die eingegebenen Schlüsselbegriffe gegen einen vorkombinierten Index, der aus einem vorgegebenen Set von HTML-Seiten erzeugt wurde.

In ersten Ansätzen sind auch bereits Suchmöglichkeiten nach anderen Vorgaben als textuellen Zusammenhängen realisiert worden, beispielsweise die Suche nach bestimmten graphischen Elementen oder nach Mustern in Graphikdateien, welche zu einem vorgegebenen Muster, beispielsweise einem Gesicht oder ähnlichem, mittels Mustererkennung als ähnlich einzustufen sind.

In kleineren Informationspools als dem Internet kann eine Suche auch durch Direktzugriff auf die Informationsobjekte (beispielsweise Datenbankeinträge oder HTML-Seiten) durchgeführt werden, ohne daß auf einen vorkombinierten Index zurückgegriffen werden muß. Bei größeren Datenbeständen stößt dieses Verfahren jedoch rasch an Grenzen der zur Verfügung stehenden Datendurchsätze auf den zur Suchmaschine führenden Datenleitungen. Die Suchzeiten wachsen dann rasch in für Anwender nicht mehr diskutablem Ausmaß.

Nach dem Finden geeigneter Informationsobjekte, die den anwenderdefinierten Vorgaben genügen, müssen diese Informationen dem Anwender präsentiert werden. Hierbei besteht die Kunst im Festlegen einer Rangordnung der Suchergebnisse, da die Anwender die Ergebnisse üblicherweise von oben nach unten sequentiell durcharbeiten (je nach Sprache auch von unten nach oben). Daher ist es sinnvoll, die vom System als best eingestuften Suchergebnisse so anzuordnen, daß diese dem anfragenden Anwender zuerst präsentiert werden.

Die einfachste Möglichkeit eine Rangordnung festzulegen besteht darin, sie nach der Häufigkeit des Vorkommens eines Suchbegriffs beziehungsweise Kriteriums in einem Informationsobjekt festzulegen.

Die Internet-Suchmaschine Google betrachtet darüber hinaus Verknüpfungen, welche auf eine HTML-Seite verweisen und Verknüpfungen, die von einer gegebenen Seite wegführen, um eine Rangordnung einer Seite durchführen zu können. Die Internet-Suchmaschine "DirectHit" verwendet ein Rangordnungsverfahren unter Verwendung einer Benutzerpräferenz, das heißt, daß HTML-Seiten, welche durch Internet-Anwender bevorzugt werden, in der Ergebnisliste bevorzugt behandelt werden.

Sogenannte Meta-Suchmaschinen leiten die anwenderdefinierten Suchvorgaben an eine Gruppe von Suchmaschinen weiter und kombinieren die Ergebnisse zu einer Suchliste, aus der sie Dubletten entfernen.

Wie bereits oben erwähnt, bieten einige Suchmaschinen auch manuell aktualisierte Klassifikationssysteme als zusätzliche Serviceleistung an, beispielsweise Yahoo oder Google. Falls ein Resultat in den Kategorisierungssystemen gefunden wird, wird die entsprechende Kategorisierungsangabe mit dem resultierenden Treffer assoziiert. Die Suche selbst kann ebenfalls innerhalb einer Kategorie dieser Klassifikation beschränkt werden. Auch gibt es Suchmaschinen, welche anhand von Stichworten gefundene Einträge automatisch zu kategorisieren versuchen.

Bei einer Suche in indizierten Informationspools wird der Anwender häufig mit Ergebnissen konfrontiert, welche einem völlig anderen Gebiet entsprechen als intendiert. So kann beispielsweise der Suchbegriff "Schloß" sowohl zu entsprechenden Gebäuden als auch zu entsprechenden Sicherungseinrichtungen führen. Der Begriff "Drive" kann sowohl für Festplattenlaufwerke als auch im Automobilbereich und im Golf etc. verwendet werden. Gerade die Suche nach Abkürzungen zeigt eine häufig erstaunlich phantasievolle Vielfalt an Möglichkeiten, die den Anwender in die falsche Richtung führen können.

Eine Suche nach Kategorien andererseits kann den Anwender mit einer großen Anzahl von Einträgen in einer Kategorie konfrontieren, welche allesamt den tatsächlich gesuchten Kontext nicht aufweisen, sofern er überhaupt eine geeignete Kategorie identifizieren kann, da ein Hineindenken in die Vorstellungen derjenigen, welche die Kategorien eingeführt und ihnen Informationsobjekte zugewiesen haben, notwendig ist.

Zwar bieten die auf dem Markt befindlichen Suchmaschinen ein Durchsuchen nach Stichworten oder anderen Vorgaben in den indizierten Datenbeständen oder ein "Browsen" in den Kategorien an. Bei einigen kann man die Stichwortsuche auch auf bestimmte Kategorien beschränken. Eine interaktive Kombination beider Strategien ist bislang nicht vorgenommen worden. Es ist daher die Aufgabe der vorliegenden Erfindung, Verfahren und Systeme bereitzustellen, die eine effizientere Ausnutzung und Kombination der Suchmöglichkeiten implementieren.

### Darstellung der Erfindung

Diese Aufgabe wird erfindungsgemäß gelöst durch die Bereitstellung eines Verfahrens zum kategoriegestützten Suchen nach Informationsobjekten gemäß dem unabhängigen Patentanspruch 1 sowie ein System zum Auffinden geeigneter Informationsobjekte aus einem Informationspool gemäß dem unabhängigen Patentanspruch 9.

Weitere vorteilhafte Ausgestaltungen, Aspekte und Details der vorliegenden Erfindung ergeben sich aus den abhängigen Patentansprüchen, der Beschreibung und der beigefügten Zeichnung.

Der Erfindung liegt das Prinzip zu Grunde, zum Durchsuchen sowie nach dem Durchsuchen des Informationspools nach anwenderdefinierten Vorgaben die Darstellung der Ergebnisse mittels ebenfalls anwenderdefinierter Kategorien zu modulieren.

Die Erfindung ist daher gerichtet auf ein Verfahren zum kategoriegestützten Suchen nach Informationsobjekten in Informationspools, das folgende Schritte aufweist:
- Durchsuchen des Informationspools nach geeigneten Informationsobjekten, welche anwenderdefinierten Vorgaben genügen;
- Feststellen zumindest einer Kategorie eines Kategorisierungssystems für zumindest einen Teil des Informationspools, zu der das oder die gefundenen Informationsobjekte zugeordnet sind und/oder Zuordnen der gefundenen Informationsobjekte zu geeigneten Kategorien zumindest dann, wenn ein Informationsobjekt nach Kategorie-Kriterien gefiltert werden soll;
- Filtern der gefundenen Informationsobjekte nach anwenderdefinierten Kategoriekriterien und/oder anwenderdefinierten Ähnlichkeitskriterien; und
- Präsentieren der gefilterten Informationsobjekte.

Unter einem Informationspool kann hierbei im Sinne der vorliegenden Erfindung jegliche Sammlung von Informationsobjekten verstanden sein, sei dies eine beispielsweise durch das Internet verknüpfte Sammlung von HTML-Dokumenten, eine Datenbank mit Einträgen, oder auch ein vorkombinierter Index von im Internet oder einem Intranet verteilt gespeicherten Informationsobjekten.

Unter einem Informationsobjekt ist jegliche Entität von Daten zu verstehen, welche Informationen enthalten, seien dies HTML-Seiten, Graphikdateien, allgemeine Textdateien, Einträge in Datenbanken, etc. Die Informationsobjekte können als dem Informationspool zugehörig definiert sein durch unterschiedlichste Kriterien, sei es gemeinsame Zugehörigkeit zu einer Datenbank, örtliche Zuordnung zu einem bestimmten Rechner oder Miteinanderverknüpfung, beispielsweise durch die Strukturen des Internet.

Zur Durchführung des erfindungsgemäßen Verfahrens wird weiterhin ein Kategorisierungssystem mit Kategorien, beispielsweise hierarchisch unter einer Wurzelkategorie angeordneten Kategorien, benötigt, mit dem zumindest ein Teil der Informationsobjekte des Informationspools klassifiziert werden können oder klassifiziert worden sind.

Unter einer anwenderdefinierten Vorgabe ist jede vom Anwender eingegebene oder bereitgestellte Information zu verstehen, welche als Suchkriterium verwendet werden soll. Dies können üblicherweise Zeichenketten sein, jedoch auch komplexere Angaben, die solche Zeichenketten in Kombination weiterer Merkmale, wie dem Alter einer Information, der Dateiart des Informationsobjekts, einer Sprache, in der das Informationsobjekt vorliegen soll etc. Auch Muster zur Verwendung mit Mustererkennungsprogrammen zum Durchsuchen von Informationspools nach solchen Mustern kann als Suchkriterium vorgegeben werden.

In einem nächsten Schritt des Verfahrens wird festgestellt, welche der gefundenen Informationsobjekte zu welchen Kategorien des Kategorisierungssystems gehören. Hierbei kann entweder auf bereits existierende Klassifizierungen von Informationsobjekten zugegriffen werden, das heißt die gefundenen Informationsobjekte sind bereits kategorisiert worden, oder eine solche Kategorisierung kann ad hoc vom System durchgeführt werden. In diesem Schritt des erfindungsgemäßen Verfahrens steht mithin eine Anzahl von Informationsobjekten und Informationen darüber, zu welchen Kategorien die Informationsobjekte gehören, zur Verfügung. Dieser Schritt ist zumindest immer dann durchzuführen, wenn der nachfolgende Filterungsschritt Kategoriekriterien, die ein Anwender gesetzt hat, verwendet. Bei der ausschließlichen Nutzung von Ähnlichkeitskriterien seitens des Anwenders kann dieser Schritt optional entfallen. Es kann allerdings bevorzugt sein, daß aus Gründen der einheitlichen Strukturierung der Schritt stets durchgeführt wird, unabhängig davon, ob der Anwender Ähnlichkeits- oder Kategoriekriterien vorgeben will. Bei sequentiellem Ablauf des Verfahrens, bei dem erst nach einer ersten Präsentationsphase aller gefundenen Informationsobjekte der Anwender entscheidet, ob er nach Kategoriekriterien oder nach Ähnlichkeitskriterien filtern möchte, kann dieser Schritt unverzichtbar sein.

Im nächsten Verfahrensschritt des erfindungsgemäßen Verfahrens erfolgt die Filterung der bislang aufgefundenen Informationsobjekte mittels weiterer anwenderspezifizierter Kriterien. Dies können einerseits Kategoriekriterien sein, andererseits Ähnlichkeitskriterien.

Bei einem Kategoriekriterium kann der Anwender festlegen, daß nur solche Informationsobjekte im nächsten Präsentationsschritt dargestellt werden, die zu einer bestimmten Kategorie gehören, die nicht zu einer bestimmten Kategorie gehören, die zu mehr als einer Kategorie, beide spezifiziert, gehören, die zwar zu einer Kategorie gehören, jedoch zu einer anderen nicht gehören dürfen, usw.

Ähnlichkeitskriterien können beispielsweise automatisch aufgestellt werden, indem der Anwender ein Informationsobjekt, dessen Inhalt er bereits begutachtet hat, als besonders nützlich ansieht und das System auffordert (beispielsweise durch Anklicken in einem Fenster eines Browsers für HTML-Seiten), solche Informationsobjekte aufzufinden, die mit dem als nützlich empfundenen Informationsobjekt Ähnlichkeiten aufweisen. Diese Ähnlichkeiten können beispielsweise in ähnlichen Schlüsselwörtern bestehen, aber auch im selben Dateityp, derselben Informationsquelle (Anbieter), derselben Sprache, etc. Jegliche beliebige Ähnlichkeitskriterien sind hier vorstellbar, und ihre Realisation innerhalb der Erfindung ist lediglich implementationsabhängig.

Letzter Schritt des erfindungsgemäßen Verfahrens ist das Präsentieren der gefilterten Informationsobjekte. Unter Präsentieren ist hierbei die Darstellung in einer dem Benutzer zugänglichen Form zu verstehen, wobei auch wiederum die im Stand der Technik üblichen Maßnahmen zum Feststellen einer Ordnung angewendet werden können. Die Präsentation kann mittels eines speziellen Datenbankprogramms erfolgen, aber wird üblicherweise, speziell bei Verwendung der Erfindung zum Internet-Suchen, mittels eines üblichen Seitenbeschreibungssprachen-Darstellungsprogramms, beispielsweise eines HTML-Browsers, erfolgen.

Wie bereits oben erläutert, können die Informationsobjekte in unterschiedlichster Weise gespeichert sein. Insbesondere wird es bevorzugt, daß die Informationsobjekte in einem verteilten Informationsnetzwerk residieren, beispielsweise einem Intranet, einem Extranet oder dem Internet.

Zum Feststellen der Kategorie der gefundenen Informationsobjekte kann ein Kategoriespeicher hinzugezogen werden, welcher Kategorien und Informationen von zu diesen Kategorien gehörigen Informationsobjekten enthält. Diese Informationen zu den Informationsobjekten, welche den einzelnen Kategorien zugeordnet sind, können die Informationsobjekte selbst sein, jedoch auch Metainformationen, welche zum Auffinden der Informationsobjekte, beispielsweise in einer Datenbank oder einem verteilten Netzwerk, dienen können. Solche Metainformationen können beispielsweise Referenzen (Links) auf die eigentlichen Informationsobjekte sein. Bei hierarchisch gegliederten Kategorisierungssystemen ist der Kategoriespeicher so ausgelegt, daß hierarchisch höheren Kategorien nicht nur Informationen über Informationsobjekte zugeordnet sind, sondern auch Unterkategorien.

Typischerweise wird ein solcher Kategoriespeicher unabhängig von einer konkreten Benutzeranfrage bereits vorab mit Daten gefüllt, was entweder manuell durch Erfassen von als interessant angesehenen Informationsobjekten erfolgen kann oder durch ein automatisches Zuordnen von aufgefundenen Informationsobjekten zu bestimmten Kategorien. Die hierbei verwendbaren Techniken sind dem Fachmann geläufig, als sie in vielfältiger Weise bereits zum Klassifizieren von Internet-Informationen bei herkömmlichen Suchmaschinen verwendet werden.

Ein automatisches Feststellen einer geeigneten Kategorie kann auch ad hoc nach Stellen einer Benutzeranfrage mit den zunächst gefundenen Informationsobjekten durchgeführt werden. Dazu wird es bevorzugt, daß die gefundenen Informationsobjekte geeigneten Kategorien zugeordnet werden, indem die gefundenen Informationsobjekte nach Schlüsselkriterien durchsucht werden, die in einem Schlüsselkriteriumsspeicher bestimmten Kategorien zugeordnet sind, wobei das Vorliegen des einer Kategorie zugeordneten Schlüsselkriteriums für ein Informationsobjekt zu seiner Zuordnung zu dieser Kategorie führt.

Es ist grundsätzlich vorstellbar, daß die gefundenen, und gegebenenfalls die gefilterten, Informationsobjekte bei der Präsentation dem Benutzer direkt inhaltlich angezeigt werden. Bei einer größeren Anzahl von aufgefundenen beziehungsweise gefilterten Informationsobjekten kann jedoch hierbei die zu präsentierende Datenmenge ein akzeptables Maß schnell übersteigen. Es wird daher bevorzugt, daß die gefilterten Informationsobjekte als Verknüpfungen auf diese Informationsobjekte präsentiert werden, gegebenenfalls mit zusätzlichen Informationen, wie beispielsweise einem Textanfang, einem textuellen Informationsobjekt (z.B.

Zusammenfassung), einem Dateinamen (sofern es sich um eine Datei handelt), oder einer Auflistung von als interessant angesehenen Stichwörtern (beispielsweise solchen der Schlüsselkriterien einer bestimmten Kategorie, welche sich im Informationsobjekt wiederfinden).

Das Verfahren ist bislang im Hinblick auf den chronologischen Ablauf der einzelnen Verfahrensschritte beschrieben worden, ohne daß auf die Interaktion des Verfahrens mit einem Anwender, welche zu einem bestimmten Zeitpunkt notwendig ist, eingegangen worden wäre. Im folgenden sollte daher diese Interaktion erläutert werden.

Der Anwender gibt für zwei verschiedene Schritte des Verfahrens Spezifikationen vor, nämlich zum einen zum Durchsuchen des Informationspools anwenderdefinierte Vorgaben, wie oben erläutert, zum anderen Informationen, wie die gefundenen Informationsobjekte weiterhin zu filtern sind, wobei sowohl Kategorien als auch Ähnlichkeitskriterien vorgegeben werden können. Es ist grundsätzlich möglich, daß vor dem Starten des Verfahrens der Anwender beide Informationen bereitstellt, beispielsweise in Form von Stichwörtern für die anwenderdefinierten Vorgaben und durch Auswahl geeigneter Kriterien aus einem Kategorisierungssystem oder selbst durch Vorgabe von Ähnlichkeitskriterien (ähnliches Datum, etc.).

Es wird jedoch grundsätzlich bevorzugt, daß das erfindungsgemäße Verfahren interaktiv und sukzessive durchgeführt wird, damit der Anwender eine Übersicht der gefundenen Informationsobjekte erhält und auf Grund dieser Übersicht dann festlegen kann, welche Kategoriekriterien oder Ähnlichkeitskriterien ihm für die weitere Filterung der Informationsobjekte erfolgversprechend erscheinen. Daher wird es bevorzugt, daß nach dem Feststellen der Kategorien der gefundenen Informationsobjekte dem Anwender zunächst eine initiale Liste der gefundenen Informationsobjekte und deren Kategorien präsentiert wird, so daß der Anwender Kategoriekriterien und/oder Ähnlichkeitskriterien für die Filterung der bereits gefundenen Resulatate festlegen kann.

Üblicherweise wird also dem Anwender eine Liste der gefundenen Informationsobjekte präsentiert (als Verweise mit Stichwortinformationen, beispielsweise), wobei er dann Kategoriekriterien beispielsweise dadurch vorgeben kann, daß er ein ihm interessant erscheinendes Informationsobjekt markiert und dem System, welches das Verfahren durchführt, durch Befehlseingabe (Mausklick, Mausklick rechts, Alt-Mausklick, Shift-Mausklick, oder Menüaufrufe etc.) mitteilt, daß das Verfahren nach Informationsobjekten derselben Kategorie oder aller Kategorien außer dieser etc. die Informationsobjekte filtern soll.

In ähnlicher Weise kann er auch Ähnlichkeitskriterien für die Filterung festlegen, wobei er wahlfrei auch nach Selektion eines Prototyp-Informationsobjekts eine Übersicht mit möglichen Ähnlichkeitskriterien präsentiert bekommt, wie beispielsweise ähnlicher Inhalt, ähnliches Datum, identischer oder ähnlicher Dateityp oder eine Liste von im Dokument verwendeten Worten z.B., aus denen er auswählen kann.

In alternativen Ausführungsformen ist es ebenso möglich, daß dem Anwender zunächst keine Informationsobjekte präsentiert werden, sondern beispielsweise eine Übersicht aller Kategorien der Informationsobjekte, die aufgefunden worden sind. Aus diesen kann der Anwender dann auswählen beziehungsweise die Kategoriekriterien zusammenstellen.

Das erfindungsgemäße Verfahren kann zusätzlich um den Aspekt einer Nützlichkeitsbewertung erweitert werden. Hierbei wird es bevorzugt, daß zusätzlich eine Anwenderbewertung einer Nützlichkeitsrangfolge der gefilterten Informationsobjekte durchgeführt wird. Diese kann bereits bei einer Suche die Recherchequalität verbessern, da die Nützlichkeitsbewertung in die Ähnlichkeitskriterien einfließen kann. Ihren besonderen Nutzen entfaltet diese Bewertung allerdings erst bei weiteren Abfragen, gegebenenfalls durch andere Benutzer. Bei Vorgabe ähnlicher oder identischer Schlüsselbegriffe etc. durch einen später das System verwendenden Anwender kann damit die Reihenfolge der Präsentation der Informationsobjekte in einer Art "Intelligent Guess" bereits vorab formuliert werden und damit gegebenenfalls die Geschwindigkeit des Auffindens von nützlichen Informationen vergrößert werden.

In einer weiteren Ausführungsform der vorliegenden Erfindung kann das Durchsuchen des Informationspools auf solche Informationsobjekte beschränkt werden, die anwenderdefinierten Kategorien zugehören.

Dieses aus dem Stand der Technik grundsätzlich bekannte Verfahren schränkt bereits vorab die Zahl der zu präsentierenden beziehungsweise zu durchsuchenden Informationsobjekte ein. Bei solchen Informationspools, bei denen nicht sämtliche Informationsobjekte bereits Kategorien zugeordnet sind, wie dem Internet, kann ein solcher Schritt hingegen nicht durchgeführt werden, da dann möglicherweise wichtige Informationsobjekte nicht gefunden werden würden, da eine Suche nur im kategorisierten Teil des Informationspools durchgeführt werden kann. In solchen Fällen tritt an die Stelle des Durchsuchens des Informationspools das Präsentieren. Es werden mithin nur solche Informationsobjekte dem Anwender präsentiert, die (entweder auf Grund ihrer Zugehörigkeit zu einer Kategorie des Kategoriespeichers oder nach gegebenenfalls automatischem Feststellen der Kategorie) den anwenderdefinierten Kategorien zugehören.

Weitere aus dem Stand der Technik von Suchmaschinen bekannte Techniken können selbstverständlich in das erfindungsgemäße Verfahren integriert werden, wenn durch solche Maßnahmen die Sucheffizienz weiter verbessert werden kann.

Die Erfindung ist weiterhin auf ein System zum Auffinden geeigneter Informationsobjekte gerichtet. Alles bezüglich des Verfahrens oben ausgeführte gilt gleichermaßen für das erfindungsgemäße System, so daß auf das obige vollinhaltlich Bezug genommen und verwiesen wird, genau wie bezüglich des Verfahrens auf alles über das System zu sagende verwiesen wird.

Die Erfindung ist daher weiterhin gerichtet auf ein System zum Auffinden geeigneter Informationsobjekte aus einem Informationspool, das aufweist:
- eine Suchmaschine zum Durchsuchen des Informationspools nach anwenderdefinierten Vorgaben;
- einen Kategorisierer zum Feststellen zumindest einer Kategorie der gefundenen Informationsobjekte;
- einen Filter zum Filter von gefundenen Informationsobjekten an Hand von anwenderdefinierten Kategoriekriterien und/oder Ähnlichkeitskriterien; und
- ein Anwenderprogrammobjekt zur Darstellung der gefundenen Informationsobjekte oder von Informationen über die gefundenen beziehungsweise gefilterten Informationsobjekte und zur Eingabe von Befehlen und/oder Informationen durch einen Anwender.

Die Suchmaschine kann hierbei jede aus dem Stand der Technik bekannte Suchmaschine zum Durchsuchen von Informationspools, beispielsweise eine Datenbank-Engine oder eine Internet-Suchmaschine sein.

Der Kategorisierer kann vorzugsweise auch einen Kategoriespeicher aufweisen, der Teil des Systems zum Auffinden geeigneter Informationsobjekte ist und welcher Kategorien und Information von zu diesem gehörige Informationsobjekten enthält, wobei der Kategorisierer ein Feststellmittel zum Feststellen der Kategorie der aufgefundenen Informationsobjekte an Hand der Informationen im Kategoriespeicher aufweist. Hierbei wird also ein Abgleich der Informationsobjekte, die gefunden worden sind, mit denen den im Kategoriespeicher enthaltene Informationsobjekte durchgeführt, wird hierbei ein aufgefundenes Informationsobjekt ebenfalls im Kategoriespeicher gefunden, so kann dieses bei der Präsentation der Informationsobjekte zusammen mit der Information über die Kategorie, in der es im Kategoriespeicher gespeichert ist, präsentiert werden.

Zusätzlich kann das System einen Schlüsselkriteriumsspeicher aufweisen, in dem Schlüsselkriterien bestimmten Kategorien zugeordnet sind, wobei der Kategorisierer ein Zuordmittel zum Zuordnen von aufgefundenen Informationsobjekten an Hand der Schlüsselkriterien zu bestimmten Kategorien aufweist.

Insbesondere kann das erfindungsgemäße System zum Ausführen des erfindungsgemäßen Verfahrens bestimmt sein. Verschiedene der zum System zugehörigen Komponenten können als Hardware-Komponenten ausgeführt sein, die speziell für diesen Zweck ausgelegt sind. In der Regel wird jedoch eine allgemeine Datenverarbeitungsanlage zur Durchführung des Verfahrens und zur Abbildung des Systems in konkreten Ausführungsformen verwendet werden. Es ist daher bevorzugt, daß das System ein Computerprogrammprodukt ist, dessen Bestandteile zumindest teilweise direkt in den Hauptspeicher einer digitalen Datenverarbeitungsanlage geladen werden können und dessen Programmbestandteile in der Datenverarbeitungsanlage ausgeführt werden können.

### Kurze Beschreibung der Zeichnung

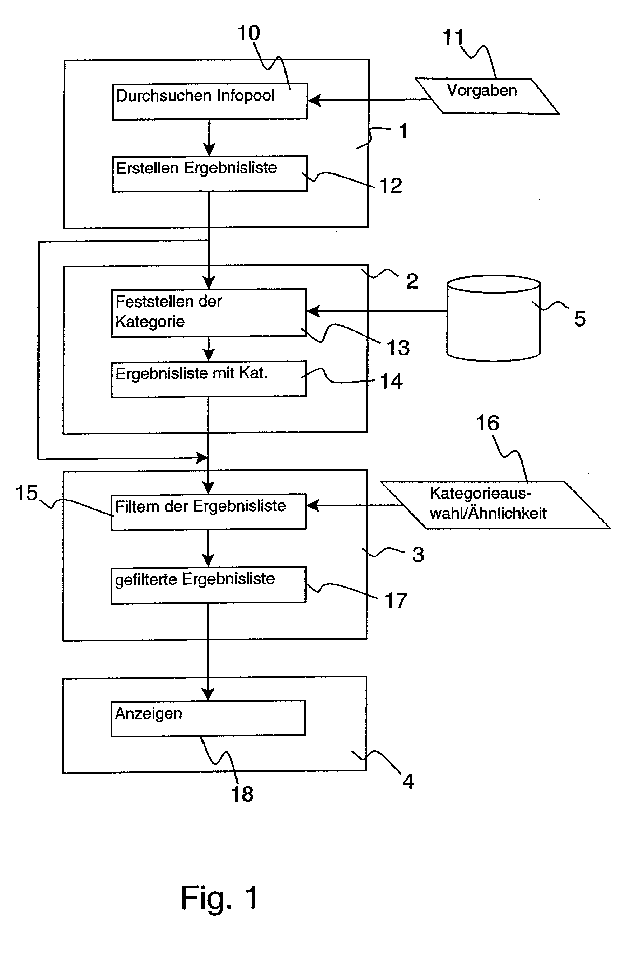

Fig 1 zeigt in einer schematisierten Darstellung ein System mit den von ihm ausgeführten Verfahrensschritten in einer bevorzugten Ausführungsform der Erfindung.

### Wege zur Ausführung der Erfindung

Das erfindungsgemäße System verbessert existierende Suchmaschinen, beispielsweise Internet-Suchmaschinen durch interaktive Verwendung der mit der Suchmaschine assoziierten Klassifizierungshierarchie. Wenn ein Anwender Suchvorgaben, beispielsweise einen Satz von Schlüsselwörtern in die Suchmaschine eingibt, wird zunächst wie gewöhnlich eine erste Ergebnisliste produziert und dem Anwender präsentiert. Für solche Ergebnisse, für die es ein Eintrag in dem Kategorisierungssystem gibt oder für den eine Kategorie bestimmt werden kann, kann ein Anwender interaktiv angeben, ob die entsprechende Kategorie relevant für die Produktion korrekter Resultate ist oder nicht.

Als Beispiel sei angenommen, daß ein Anwender Informationen über "Drives" im Gebiet der Automatisierung finden möchte. Eine Suche mit einer üblichen Suchmaschine wie Google unter Verwendung des Stichworts "Drives" ergibt eine Resultatseite, welche alle Hardware-Drives betrifft, die in der Kategorie Computer-Hardware-Storage von Google gefunden werden.

Die Intention des Anwenders war jedoch, Informationsobjekte zum Begriff "Drives", wie sie in der Automatisierung verwendet werden, zu finden. Mit klassischen Suchmaschinen wie Google oder Altavista gestaltet sich daher seine Sucher als überaus schwierig. Beim erfindungsgemäßen Verfahren kann er an Stelle einer Verfeinerung der Suchanfrage, beispielsweise durch Verwendung der Worte "Drives AND Automation" einfach auf den Kategoriepfad klicken, im gegebenen Beispiel Computer-Hardware-Storage, und von einem daraufhin erscheinenden Pop-Up-Menü den Befehl "Entfernen" wählen. Dies resultiert in einem Filterungsvorgang seitens des erfindungsgemäßen Systems, beziehungsweise Verfahrens, in dem alle Einträge, die in der angewählten Kategorie (Computer-Hardware-Storage) oder in einer ihrer Sub-Kategorien gefunden werden, aus der präsentierten Ergebnisliste entfernt werden.

Auch könnte es ermöglicht werden, statt der konkret angegebenen Sub-Kategorie eine übergeordnete Kategorie im Kategoriepfad (bei hierarchisch angeordneten Klassifizierungssystemen) zu entfernen, beispielsweise alle Ergebniseinträge zum Thema Computer schlechthin an Stelle nur der Einträge zu "Storage". Auf diese Weise läßt sich die Zahl der eliminierten, weil irrelevanten Informationsobjekte stark vergrößern und damit das Suchergebnis verbessern.

In gleicher Weise könnten alle Einträge, die beispielsweise in der Sub-Kategorie Business -> Industries -> Manufacturing zugeordnet sind, als relevant markiert werden, so daß entweder alle anderen Einträge in der Ergebnisliste entfernt werden oder daß die derart selektierten zumindest in der Rangordnung der Präsentation der Informationsobjekte oben erscheinen (beziehungsweise unten bei entsprechenden Sprachvarianten).

Wie bereits erläutert, ist es auch möglich nach Ähnlichkeitskriterien zu filtern. Typische Anweisungen an das System in solchen Fällen können beispielsweise sein, alle Einträge zu entfernen, die zu einem gegebenen markierten Resultat ähnlich sind, oder nur solche, die ähnlich sind, für die Filterung in Betracht zu ziehen. Als Basis für die Bewertung der Ähnlichkeit zweier Informationsobjekte können unterschiedlichste Kriterien herangezogen werden. In konkreten Ausführungsbeispielen wird oft bevorzugt werden, als Basis für die Ähnlichkeitsbestimmung den im Titel eines Informationsobjekts erscheinenden Text und die Zusammenfassung des Informationsobjekt zu verwenden.

Titel und Zusammenfassung können beispielsweise in einem Vektorraum repräsentiert werden, wobei der Vektorraum eines ausgewählten Eintrags mit allen anderen Einträgen verglichen wird, um die irrelevanten zu eliminieren. Dies unterscheidet sich im übrigen auch von dem im Stand der Technik bekannten Verfahren ähnliche Seiten zu finden, bei dem ähnliche Seiten im Gesamtnetz und nicht nur in den aufgefundenen Informationsobjekten durchgeführt werden.

Zur Erläuterung der Erfindung soll ein abstrahiertes Ausführungsbeispiel anhand der Darstellung der Fig. 1 erläutert werden. In Fig. 1 ist ein erfindungsgemäßes System, beispielsweise ein die Erfindung ausführendes Datenverarbeitungsprogramm, mit einer Suchmaschine 1, einem Kategorisierer 2, einem Filter 3 und einer Ausgabeeinheit 4 gezeigt. In Schritt 10 des erfindungsgemäßen Verfahrens, der in der Suchmaschine 1 stattfindet, werden geeignete Informationsobjekte im Infopool gesucht, wobei als Eingabe anwenderdefinierte Vorgaben 11 verwendet werden. In Schritt 12 des Verfahrens wird beispielsweise eine Ergebnisliste erstellt. Diese wird an den Kategorisierer 2 weitergeleitet, wo in Schritt 13 die Kategorie der gefundenen Informationsobjekte festgestellt wird. Dazu kann der Kategorienspeicher 5, der in bestimmten Ausführungsformen zugleich oder alternativ ein Schlüsselkriteriumsspeicher sein kann, verwendet. Der Umgehungspfeil zwischen Schritt 12 und Schritt 15 zeigt, daß dieser Schritt optional ist, wenn beispielsweise die spätere Filterung nach Ähnlichkeitskriterien erfolgen soll. Auch wenn für bestimmte Informationsobjekte keine Kategorie festgestellt werden kann, werden diese zusammen mit den anderen in Schritt 14 in einer neuen Ergebnisliste mit Kategorieinformationen zusammengefasst.

In Schritt 15, der im Filter 3 stattfindet, werden Eingaben 16 des Anwenders, nämlich Kategorie- und/oder Ähnlichkeitskriterien zum Filtern der Ergebnisliste, entweder aus Schritt 12 oder aus Schritt 14, verwendet, um gefilterte, d.h. den Kriterien genügende, Informstionsobjekte in Schritt 17 zu einer gefilterten Ergebnisliste zusammenzustellen.

Im Anzeigeprogramm 4 werden die derart gefilterten Informationsobjekte schließlich im Anzeigeschritt 18 dem Anwender präsentiert.

Die in Schritten 12 und 14 erzeugten Zwischenergebnislisten können ebenfalls dem Anwender angezeigt werden, um ihn bei der Formulierung der Filterungskriterien zu unterstützen.

### Bezugszeichenliste

- 1: Suchmaschine
- 2: Kategorisierer
- 3: Filter
- 4: Ausgabeeinheit
- 5: Kategoriespeicher/Schlüsselkriteriumsspeicher
- 10: Durchsuchen des Informationspools
- 11: Eingabe anwenderdefinierter Vorgaben
- 12: Erstellen einer Ergebnisliste
- 13: Feststellen der Kategorie
- 14: Erstellen einer Ergebnis/Kategorieliste
- 15: Filtern der Ergebisliste
- 16: Eingabe von Kategorie-/Ähnlichkeitskriterien
- 17: Erstellen einer gefilterten Ergebnisliste
- 18: Ausgabe der gefilterten Ergebnisliste

## Patentansprüche

1. Verfahren zum kategoriegestützten Suchen nach Informationsobjekten in Informationspools, aufweisend folgende Schritte:
- Durchsuchen des Informationspools nach geeigneten Informationsobjekten, welche anwenderdefinierten Vorgaben genügen;
- Feststellen zumindest einer Kategorie eines Kategorisierungssystems für zumindest einen Teil des Informationspools, zu der das oder die gefundenen Informationsobjekte zugeordnet sind, und/oder Zuordnen der gefundenen Informationsobjekte zu geeigneten Kategorien zumindest dann, wenn ein Informationsobjekt nach Kategorie-Kriterien gefiltert werden soll;
- Filtern der gefundenen Informationsobjekte nach anwenderdefinierten Kategorie-Kriterien und/oder anwenderdefinierten Ähnlichkeitskriterien, und
- Präsentieren der gefilterten Informationsobjekte.

2. Verfahren nach Anspruch 1, **dadurch gekennzeichnet, daß** die Informationsobjekte in einem verteilten Informationsnetzwerk residieren.

3. Verfahren nach Anspruch 1 oder 2, **dadurch gekennzeichnet, daß** zum Feststellen der Kategorie der gefundenen Informationsobjekte ein Kategorienspeicher verwendet wird, der Kategorien und Informationen von zu diesen gehörige Informationsobjekten enthält.

4. Verfahren nach einem der Ansprüche 1 bis 3, **dadurch gekennzeichnet, daß** gefundene Informationsobjekte geeigneten Kategorien zugeodnet werden, indem die gefundenen Informationsobjekte nach Schlüsselkriterien durchsucht werden, die in einem Schlüsselkriteriumsspeicher bestimmten Kategorien zugeordnet sind, wobei das Vorliegen der einer Kategorie zugeordneten Schlüsselkriterien für ein Informationsobjekt zu seiner Zuordnung zu dieser Kategorie führt.

5. Verfahren nach einem der Ansprüche 1 bis 4, **dadurch gekennzeichnet, daß** die gefilterten Informationsobjekte als Verknüpfungen auf diese Informationsobjekte präsentiert werden.

6. Verfahren nach einem der Ansprüche 1 bis 5, **dadurch gekennzeichnet, daß** nach dem Feststellen der Kategorien der gefundenen Informationsobjekte dem Anwender eine initiale Liste der gefundenen Informationsobjekte und deren Kategorien präsentiert wird, so daß der Anwender Kategorie-Kriterien und/oder Ähnlichkeits-Kriterien für die Filterung festlegen kann.

7. Verfahren nach einem der Ansprüche 1 bis 6, **dadurch gekennzeichnet, daß** zusätzlich eine Anwenderbewertung einer Nützlichkeitsrangfolge der gefilterten Informationsobjekte durchgeführt wird.

8. Verfahren nach einem der Ansprüche 1 bis 7, **dadurch gekennzeichnet, daß** das Durchsuchen des Informationspools auf solche Informationsobjekte beschränkt wird, die anwenderdefinierten Kategorien zugehören.

9. System zum Auffinden geeigneter Informationsobjekte aus einem Informationspool, aufweisend:
- eine Suchmaschine (1) zum Durchsuchen des Informationspools nach anwenderdefinierten Vorgaben;
- einen Kategorisierer (2) zum Feststellen zumindest einer Kategorie der gefundenen Informationsobjekte;
- einen Filter (3) zum Filtern von gefundenen Informationsobjekten anhand von anwenderdefinierten Kategorie-Kriterien und/oder Ähnlichkeitskriterien; und
- ein Anwenderprogrammobjekt (4) zur Darstellung der gefundenen Informationsobjekte oder von Informationen über die gefundenen bzw. der gefilterten Informationsobjekte und zur Eingabe von Befehlen und oder Informationen (11, 16) durch einen Anwender.

10. System nach Anspruch 9, **dadurch gekennzeichnet, daß** es weiterhin aufweist einen Kategoriespeicher (5), der Kategorien und Informationen von zu diesen gehörige Informationsobjekten enthält, und der Kategorisierer (2) ein Feststellmittel (13) zum Feststellen der Kategorie der aufgefundenen Informationsobjekte anhand der Informationen im Kategoriespeicher (5) aufweist.

11. System nach Anspruch 9 oder 10, **dadurch gekennzeichnet, daß** es weiterhin aufweist einen Schlüsselkriteriumsspeicher (5), in dem Schlüsselkriterien bestimmten Kategorien zugeordnet sind, und der Kategorisierer ein Zuordmittel zum Zuordnen von aufgefundenen Informationsobjekten anhand der Schlüsselkriterien zu bestimmten Kategorien aufweist.

12. System nach einem der Ansprüche 9 bis 11, **dadurch gekennzeichnet, daß** es das Verfahren gemäß einem der Ansprüche 1 bis 9 ausführen kann.

13. System nach einem der Ansprüche 9 bis 12, **dadurch gekennzeichnet, daß** es ein Computerprogrammprodukt ist, dessen Bestandteile zumindest teilweise direkt in den Hauptspeicher einer digitalen Datenverarbeitungsanlage geladen werden können und dessen Programmbestandteile von der Datenverarbeitungsanlage ausgeführt werden können.
